# EUROPEAN PATENT APPLICATION

(11) **EP 1 598 808 A1**
(43) Date of publication of application: **23.11.2005**
(21) Application number: 04704720.4
(22) Date of filing: 23.01.2004
(51) Int. Cl.: G10K 11/16

(54) **SOUND-ABSORBING STRUCTURE USING THIN FILM**

(30) Priority: 24.02.2003 JP 2003046531
(71) Applicant: KABUSHIKI KAISHA KOBE SEIKO SHO, Kobe-shi, Hyogo 651-8585 (JP)
(72) Inventor: YAMAGUCHI, Z. c/o Kobe Res. Lab. in Kobe Steel Ltd, Kobe-shi, Hyogo 651-2271 (JP); YAMAGIWA, I. c/o Kobe Res. Lab. in Kobe Steel Ltd, Kobe-shi, Hyogo 651-2271 (JP); TANAKA, T. c/o Kobe Res. Lab. in Kobe Steel Ltd, Kobe-shi, Hyogo 651-2271 (JP); UEDA, H. c/o Kobe Cor. Res. Lab. in Kobe Steel Ltd, Kobe-shi, Hyogo 651-2271 (JP)
(74) Representative: Bailey, David Martin
(86) International application number: PCT/JP2004/000593
(87) International publication number: WO 2004/075163

(57) **Abstract**

A sound-absorbing structure using thin film of the present invention includes at least a first thin film (11) and a second thin film (12), the first thin film (11) and the second thin film (12) being layered over each other and one or both of the first thin film (11) and the second thin film (12) having at least either ridges or grooves (ridges (a) in the selected figure). As each of the thin films (11) and (12), a metallic thin film or a resinous thin film is employable. It is desirable that fine through holes are formed in a large number in the thin films (11) and (12).

## Description

### TECHINICAL FIELD

The present invention relates to a technique of a sound-absorbing structure using a thin film.

### BACKGROUND ART

Sound-absorbing techniques have heretofore been known publicly.

For example, those disclosed in Patent Document 1 (Japanese Patent Laid Open No. 2002-59510) and Patent Document 2 (Japanese Patent Laid Open No. 2000-34937) are known. Patent Documents 1 and 2 are each concerned with a sound-absorbing structure using a sound-absorbing material which is a combination of a porous sound-absorbing material such as glass wool and a material excellent in weather resistance, water resistance and heat resistance.

According to the sound-absorbing structures disclosed in Patent Documents 1 and 2, it has been possible to supplement the weather resistance, water resistance and heat resistance of glass wool but not to a satisfactory extent; besides, the problem of recyclability has not been solved. Further, in case of utilizing a resonance type sound-absorbing structure, a plate vibration type sound-absorbing structure or the like, which are other sound-absorbing structures than those using the porous sound-absorbing material typified by glass wool, since a sound absorbing mechanism corresponds to energy dissipation based on resonance phenomenon, a sound absorbing band is narrow and a sound absorbing capacity is inferior to that of the porous sound-absorbing material such as glass wool.

### DISCLOSURE OF THE INVENTION

In a first aspect of the present invention, there is provided a sound-absorbing structure including at least a first thin film and a second thin film, the first thin film and the second thin film being layered over each other and one or both of the first thin film and the second thin film having at least either ridges or grooves.

The thin films vibrate upon incidence of a sound wave on the sound-absorbing structure of the present invention and their overlapping portions contact and are rubbed against each other. As a result, there occurs energy dissipation of the sound wave and a high sound absorption coefficient is attained in a wide band.

Besides, recycling is easy because a metallic thin film such as aluminum foil or a resinous thin film such as a polyvinyl chloride film is employable as each of the thin films.

In a second aspect of the present invention there is provided a sound absorbing structure including at least a first thin film and a second thin film, the first thin film and the second thin film being layered over each other and one or both of the first thin film and the second thin film being folded so as to have mutually contacting and overlapping portions.

Upon incidence of a sound wave on the sound-absorbing structure of the present invention, the first and second thin films vibrate, contact (including their overlapping portions) and are rubbed against each other. As a result, there occurs energy dissipation of the sound wave and a high sound absorption coefficient is attained in a wide band.

Besides, recycling is easy because a metallic thin film such as aluminum foil or a resinous thin film such as a polyvinyl chloride film is employable as each of the thin films.

In a third aspect of the present invention, there is provided a sound-absorbing structure including at least a first thin film and a second thin film, the first thin film and the second thin film being layered over each other, and through holes being formed in one or both of the first thin film and the second thin film.

Upon incidence of a sound wave on the sound-absorbing structure of the present invention, the thin films vibrate and their overlapping portions contact and are rubbed against each other. As a result, there occurs energy dissipation of the sound wave and a high sound absorption coefficient is attained in a wide band. Moreover, a higher sound absorbing effect can be attained because a damping effect is added when the sound wave passes through the through holes.

Further, recycling is easy because a metallic thin film such as aluminum foil or a resinous thin film such as a polyvinyl chloride film is employable as each of the thin films.

In a fourth aspect of the present invention, there is provided a sound absorbing structure including at least one thin film folded so as to have mutually contacting and overlapping portions.

Upon incidence of a sound wave on the sound-absorbing structure of the present invention, the thin film vibrates and their overlapping portions contact and are rubbed against each other. As a result, there occurs energy dissipation of the sound wave and a high sound absorption coefficient is attained in a wide band.

Besides, recycling is easy since a metallic thin film such as aluminum foil or a resinous thin film such as a polyvinyl chloride film is employable as the thin film.

Further, it is possible to reduce the cost because a sound absorbing effect is obtained even with use of a single thin film.

In a fifth aspect of the present invention, there is provided a sound-absorbing structure including at least a first thin film and a second thin film, the first thin film and the second thin film being layered over each other, and an air-permeable front member being installed at a position on the sound wave incidence side with respect to the thin films.

It is possible to protect the thin films which are apt to be damaged and hence possible to enhance durability and prolong a service life of the sound-absorbing structure. Since the front member is air-permeable, it does not shut off an incident sound wave and hence does not obstruct the sound absorbing effect.

### BRIEF DESCRIPTION OF THE DRAWINGS

Fig. 1(a) is a perspective view of a sound-absorbing structure according to a first embodiment of the present invention;
Fig. 1(b) is an enlarged sectional view of the sound-absorbing structure of the first embodiment;
Fig. 2(a) is an explanatory diagram showing an effect of the sound-absorbing structure of the first embodiment;
Fig. 2(b) is an explanatory diagram showing the effect of the sound-absorbing structure of the first embodiment;
Fig. 3 is an enlarged sectional view of a sound-absorbing structure according to a second embodiment of the present invention;
Fig. 4 is an enlarged sectional view of a sound-absorbing structure according to a third embodiment of the present invention;
Fig. 5 is an explanatory diagram showing a sound wave passing route in the sound-absorbing structure of the third embodiment;
Fig. 6 is an enlarged sectional view of a sound-absorbing structure according to a fourth embodiment of the present invention;
Fig. 7 is an enlarged sectional view of a sound-absorbing structure according to a fifth embodiment of the present invention;
Fig. 8 is an enlarged sectional view of a sound-absorbing structure according to a sixth embodiment of the present invention;
Fig. 9 is an enlarged sectional view of a sound-absorbing structure according to a seventh embodiment of the present invention;
Fig. 10(a) is an enlarged sectional view of a sound-absorbing structure according to an eighth embodiment of the present invention;
Fig. 10(b) is an enlarged sectional view of the sound-absorbing structure of the eighth embodiment;
Fig. 11 is an enlarged sectional view of a sound-absorbing structure according to a ninth embodiment of the present invention;
Fig. 12 is a diagram showing a modification of the first embodiment with three or more thin films being layered over one another;
Fig. 13(a) is a diagram showing a modification of the sixth embodiment with three of more thin films being layered over one another;
Fig. 13(b) is a diagram showing another modification of the sixth embodiment with three or more thin films being layered over one another;
Fig. 14 is a diagram showing a modification of the eighth embodiment with three or more thin films being layered over one another;
Fig. 15 is an explanatory diagram of an apparatus used in verification experiments for the sound-absorbing structures according to the present invention;
Fig. 16 is a graph showing results of verification experiments using aluminum foil as a thin film; and
Fig. 17 is a graph making comparison between a sound absorbing effect obtained by using aluminum foil formed with through holes and a sound absorbing effect obtained using aluminum foil not formed with through holes.

### BEST MODE FOR CARRYING OUT THE INVENTION

### [First Embodiment]

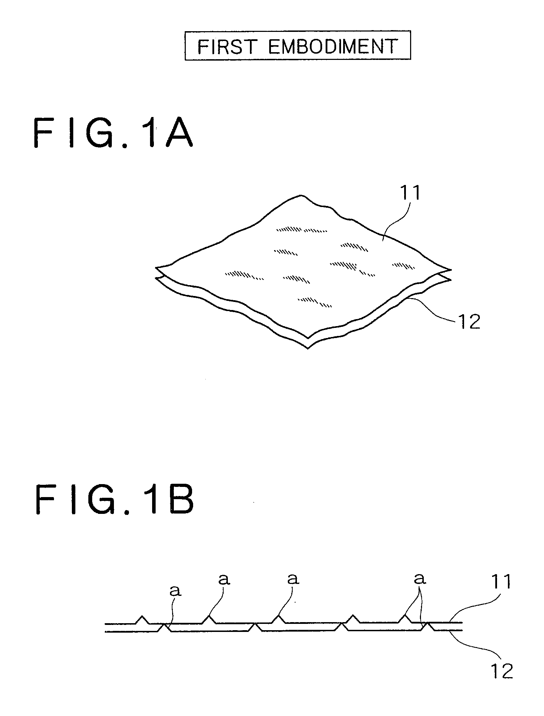

In a sound-absorbing structure according to a first embodiment of the present invention, as shown in a perspective view of Fig. 1(a), a first thin film 11 and a second thin film 12 are layered over each other. As each of the thin films 11 and 12, there may be used, for example, a metallic thin film such as aluminum foil or a resinous thin film such as a polyvinyl chloride film, but no limitation is made thereto.

As shown in an enlarged sectional view of Fig. 1(b), though not concretely shown in the perspective view of Fig. 1(a), each of the two thin films 11 and 12 has a large number of ridges (a) which face one side in the layered direction of the thin films.

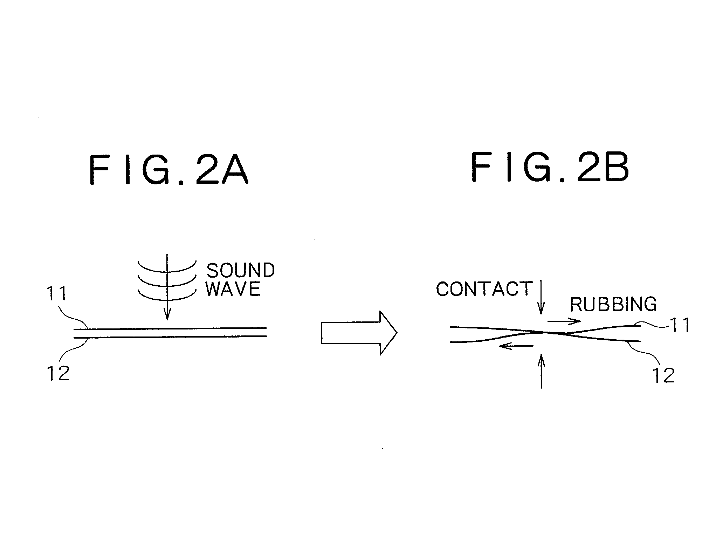

Fig. 2 shows an effect of this embodiment. Upon incidence of a sound wave as shown in Fig. 2(a), the thin films 11 and 12 vibrate and their overlapping portions contact and are rubbed against each other as shown in Fig. 2(b), with the result that there occurs energy dissipation of the sound wave and absorption of sound is effected. In Figs. 2(a) and 2(b), the ridges (a) are not shown for the convenience of explanation.

This embodiment adopts a mechanism that the two thin films 11 and 12 vibrate upon the incidence of the sound wave, contact and are rubbed against each other to dissipate energy of the sound wave. Thus, an excellent sound absorbing capacity can be exhibited in a wide band as compared with a configuration wherein the energy is dissipated using a resonance phenomenon.

Besides, since a metallic thin film such as aluminum foil or a resinous thin film such as a polyvinyl chloride film is employable as each of the thin films 11 and 12, recycling of the sound-absorbing structure is easy in comparison with the conventional material difficult to be recycled such as glass wool which has so far been compelled to be disposed of as shredder dust or the like.

### [Second Embodiment]

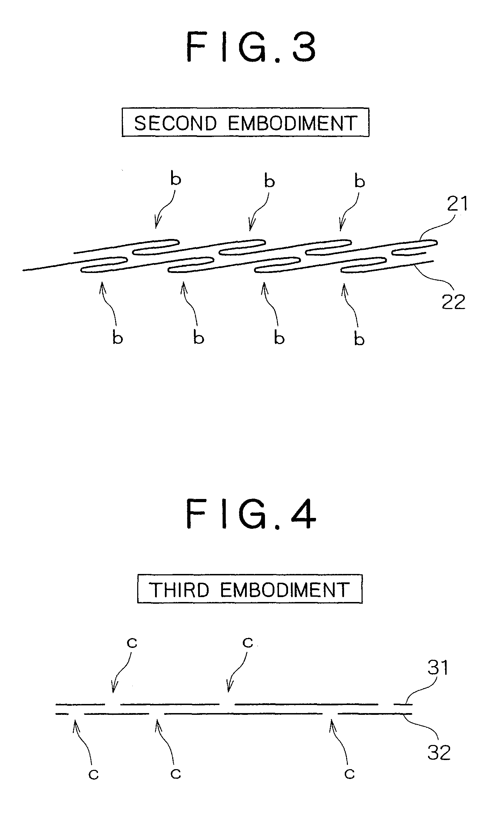

Fig. 3 shows a sound-absorbing structure according to a second embodiment of the present invention, which is the same as the first embodiment in that two thin films 21 and 22 are layered over each other.

In this second embodiment, however, the two thin films 21 and 22 are each folded so as to have mutually contacting and overlapping portions (b) instead of forming such ridges (a) as described above.

In this second embodiment, the two thin films 21 and 22 also vibrate upon incidence of a sound wave and both films (including their folded portions (b)) contact and are rubbed against each other, whereby energy of the sound wave can be dissipated and a high sound absorption coefficient can be attained in a wide band.

### [Third Embodiment]

Fig. 4 shows a sound-absorbing structure according to a third embodiment of the present invention, which is the same as the previous embodiments in that two thin films 31 and 32 are layered over each other.

However, each of the two thin films 31 and 32 is formed with fine through holes (c) extending in the film thickness direction through the film.

When seen in the layered direction of both thin films 31 and 32, the through holes (c) in the first thin film 31 are formed in positions not overlapping the through holes (c) formed in the second thin film 32. That is, the through holes (c) of one thin film (31 or 32) are formed in positions not overlapping the through holes (c) of the other thin film (32 or 31).

According to the configuration of this third embodiment, a more excellent sound deadening effect can be obtained not only because there is obtained the same effect as in the previous first and second embodiments, i.e., excellent sound deadening effect in a wide band resulting from vibration and mutual rubbing of the thin films 31 and 32, but also because the sound wave is further damped during passage thereof through the through holes (c).

Moreover, since through holes (c) used in this embodiment are fine holes, the above damping effect is further improved, that is, there is attained a remarkable improvement of the sound deadening effect.

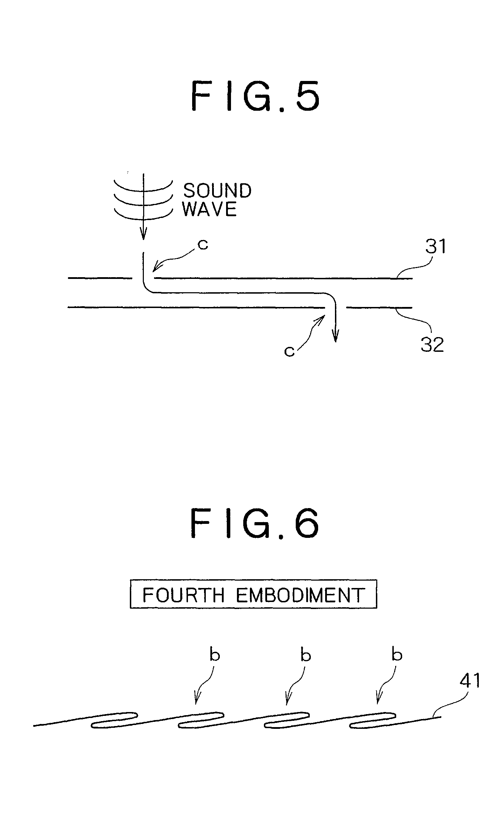

Further, according to the configuration of this third embodiment, since the through holes (c) of the thin films 31 and 32 are formed in positions such that the through holes of one thin film do not overlap the through holes of the other thin film, the sound wave, as shown in Fig. 5, passes from the incidence side through the through holes (c) of the first thin film 31, then passes between the two thin films 31 and 32 and goes out through the through holes (c) of the second thin film 32.

That is, the sound wave propagates along inner surfaces of the two thin films 31 and 32 as in Fig. 5, so that a damping action induced during passage of the sound wave through the through holes (c) and a viscous damping action induced during propagation of the sound wave along the surfaces of both thin films 31 and 32 are combined to let a still higher sound deadening effect be exhibited.

The through holes (c) may also be formed in the thin films used in the previous first and second embodiments or in the following fourth embodiment, whereby the sound deadening effect can be further improved.

### [Fourth Embodiment]

Fig. 6 shows a sound-absorbing structure according to a fourth embodiment of the present invention. This sound-absorbing structure is constituted by using a single thin film 41.

The thin film 41 is folded so as to have mutually contacting and overlapping portions (b). Therefore, when the overlapping portions (b) contact and are rubbed against each other, energy of the sound wave can be dissipated and it is possible to attain a high sound absorption coefficient in a wide band.

Since the sound-absorbing structure of this embodiment can be attained by using only one thin film 41, there is an advantage that a manufacturing cost can be reduced.

### [Fifth Embodiment]

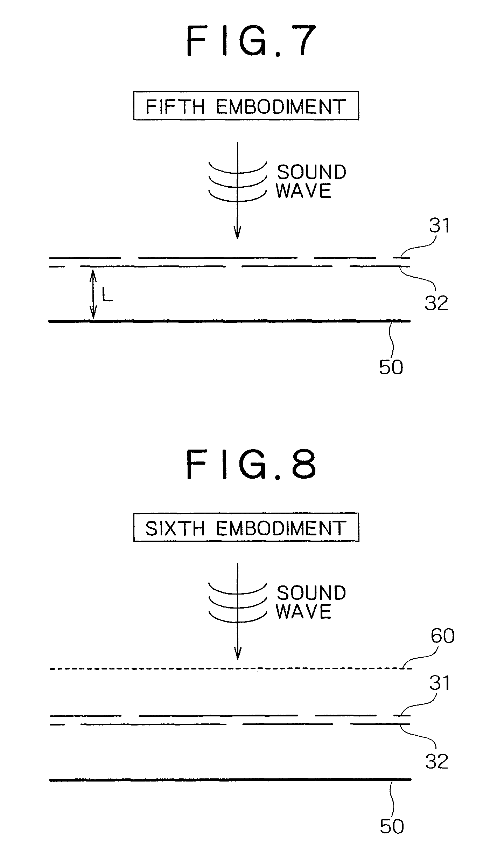

Fig. 7 shows a sound-absorbing structure according to a fifth embodiment of the present invention. In this sound -absorbing structure, which uses the thin films 31 and 32 in the third embodiment, a rear member 50 is installed on the side opposite to the sound wave incidence side with respect to the thin films 31 and 32.

According to this embodiment, a sound deadening effect can be further improved not only because the effect of the third embodiment can be equally attained, but also because a sound wave can be damped by utilizing a resonance phenomenon of the sound wave which occurs between the thin films 31, 32 and the rear member 50.

Moreover, by installing the rear member 50 through a space with respect to the thin films 31 and 32, the sound wave of a frequency corresponding to the thickness of the air layer present between the rear member 50 and the thin films 31, 32 can be damped particularly strongly. Consequently, it becomes possible to adopt a mode of use such that a distance L between the rear member 50 and the thin films 31 and 32 is adjusted to strongly damp the sound wave of or near a desired frequency.

Although the thin films 31 and 32 used in the third embodiment are used in this fifth embodiment, the thin films used in the first, second or fourth embodiment may be used instead. Likewise, flat thin films free of ridges, grooves or holes, and unfolded thin films are also employable. This is also the case with the following sixth and subsequent embodiments.

### [Sixth Embodiment]

A sound-absorbing structure according to a sixth embodiment of the present invention is shown in Fig. 8. In this sound-absorbing structure, the configuration of the previous fifth embodiment is provided with a front member 60 as a protecting member disposed on the sound wave incidence side of the thin films 31 and 32.

The front member 60 possesses air permeability and is installed on the sound wave incidence side of the sound-absorbing structure shown in Fig. 4 in order to protect the thin films 31 and 32 together with the rear member 50. As examples of the air-permeable front member, there are a perforated plate and an expanded metal, but no limitation is made thereto.

According to this sound-absorbing structure, it is possible to enhance durability of the sound-absorbing structure and prolong a service life thereof. Moreover, since the front member 60 is air-permeable, it does not shut off an incident sound wave and hence does not obstruct the sound absorbing effect.

### [Seventh Embodiment]

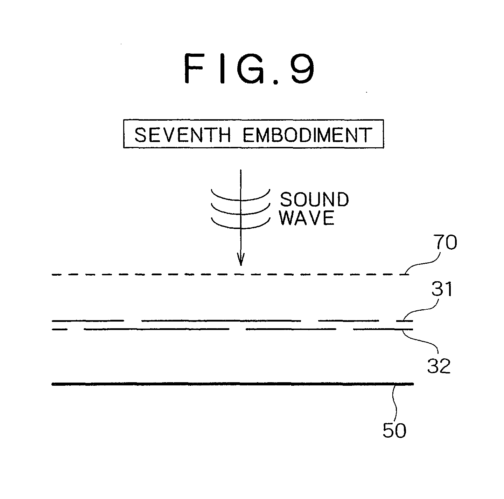

Fig. 9 shows a sound-absorbing structure according to a seventh embodiment of the present invention, in which the front member 60 used in the previous sixth embodiment is replaced by a member (porous member) 70 formed with a large number of fine holes.

The porous member 70 not only can protect the thin films 31 and 32 like the front member 60 used in the previous sixth embodiment, but also brings about a sound wave damping effect during passage of a sound wave through the porous member 70 and can thereby further improve the sound absorbing capacity.

### [Eighth Embodiment]

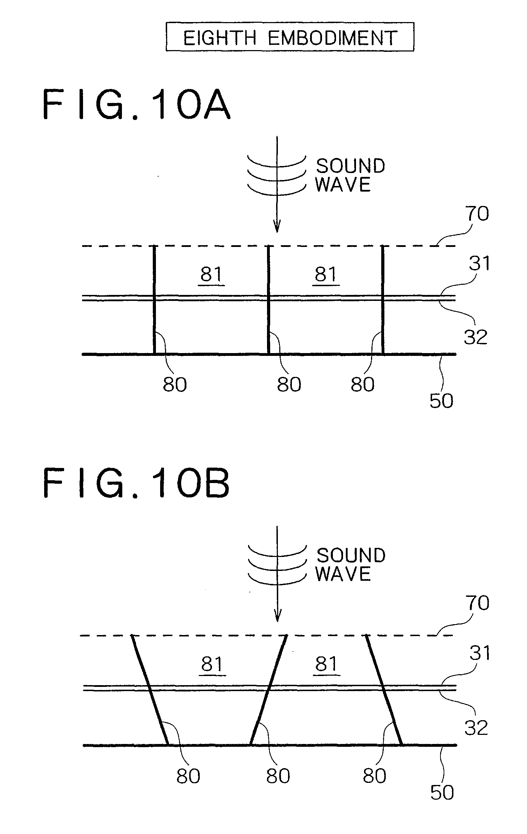

Fig. 10 shows sound-absorbing structures according to an eighth embodiment of the present invention. In this eighth embodiment, a space between the porous member 70 and the rear member 50 in the seventh embodiment is divided in the surface direction of the thin films 31 and 32.

More specifically, in this eighth embodiment, the space between the porous member 70 and the rear member 50 is partitioned in the surface direction of the thin films 31 and 32 by plural partition members 80 to form plural cells 81. The partition members 80 may be installed perpendicularly to the thin films 31 and 32 as in Fig. 9(a) or may be inclined with respect to the direction perpendicular to the thin films 31 and 32 as in Fig. 9(b).

According to such divided structures, there are formed resonance type sound-absorbing structures, whereby the sound absorbing effect is particularly improved in a low frequency range.

### [Ninth Embodiment]

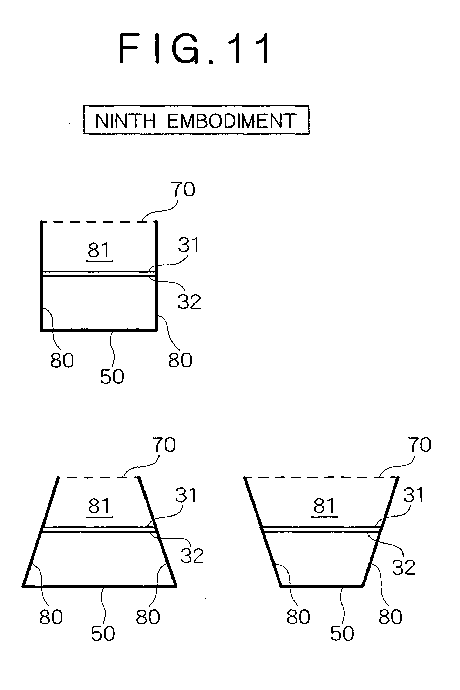

Fig. 11 shows a sound-absorbing structure according to a ninth embodiment of the present invention. In this ninth embodiment, the thin films 31, 32, rear member 50 and porous member 70 used in the eighth embodiment are separated along the partition members 80 into individual cells 81.

By thus dividing the sound-absorbing structure into individual cells 81 as small pieces, portability of the same structure is improved. Besides, various combinations are available according to required places and shapes, whereby a mode of application can be widened.

Although the number of thin films used in the above embodiments is two, a sound-absorbing structure including a suitable combination of three or more thin films can also exhibit equal or even higher sound absorbing capacity. For example, there are sound-absorbing structures each including a combination of plural thin films such as a sound-absorbing structure including the thin films 11 and 12 shown in Fig. 1 with another thin film (any of the thin films described in the above embodiments, a thin film having neither ridges or grooves nor holes, an unfolded thin film) or the like, a sound-absorbing structure including another thin film sandwiched in between the thin films 21 and 22 shown in Fig. 3, and a sound-absorbing structure including the thin films 31 and 32 shown in Fig. 4 with the thin films 11 and 12 shown in Fig. 1.

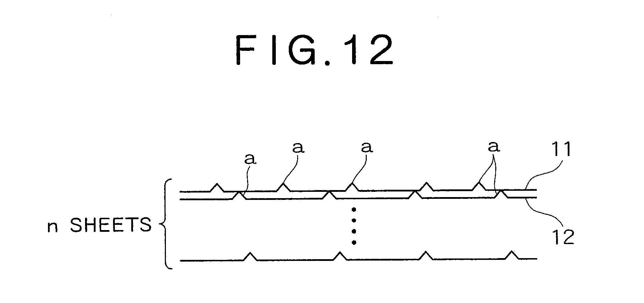

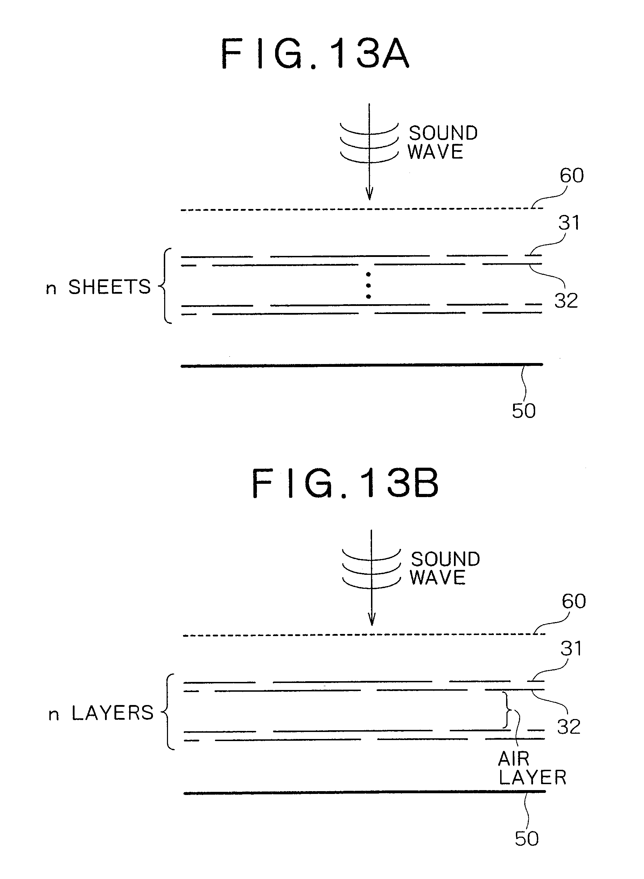

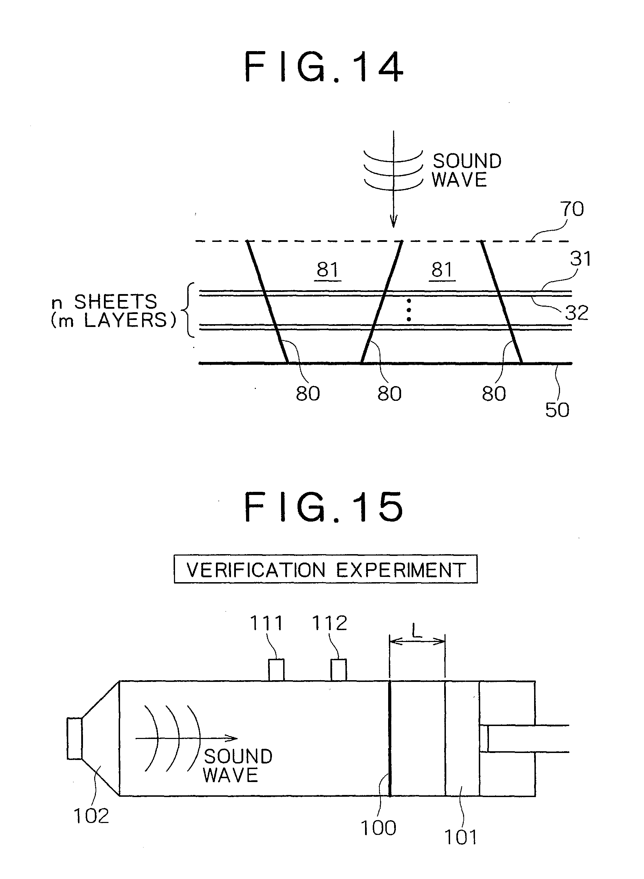

For example, in Fig. 12 is shown a structure wherein n sheets (n≥3) of the thin films used in the first embodiment of Fig. 1 are layered over one another, and in Fig. 13(a) is shown a structure wherein n sheets (n≥3) of the thin films used in the sixth embodiment of Fig. 8 are layered over one another. Further, in Fig. 13(b) is shown a structure wherein stacks each comprising plural sheets of the thin films used in the sixth embodiment of Fig. 8 are formed in n layers (n≥2) while forming an air layer between adjacent layers. Further, in Fig. 14 is shown a structure wherein n sheets (n≥3) of the thin films used in the eighth embodiment of Fig. 10 are stacked or a structure wherein stacks each comprising plural thin films are formed in m layers (m≥2) with an air layer between adjacent layers.

The thin films used in the above embodiments may be different materials.

### [Verification Experiment]

Next, with respect to the sound-absorbing structures described above, verification experiments were conducted using aluminum foil as a thin film and a rigid wall (a wall completely reflecting a sound wave) as a rear member. Fig. 15 shows an apparatus used in the experiment.

In the experiment apparatus shown in Fig. 15, a rigid wall 101 (corresponding to the rear member 50) is installed behind a double aluminum foil 100 through an air layer, and a sound wave is applied from a speaker 102 to a surface of the aluminum foil 100 located on the opposite side to the rigid wall 101. Sound pressure is measured by sound pressure measuring devices 111 and 112 at two points ahead of the double aluminum foil 100 to determine a reflected wave against an incident wave on the double aluminum foil 100. In this way, it is possible to measure a sound absorption coefficient of the double aluminum foil 100.

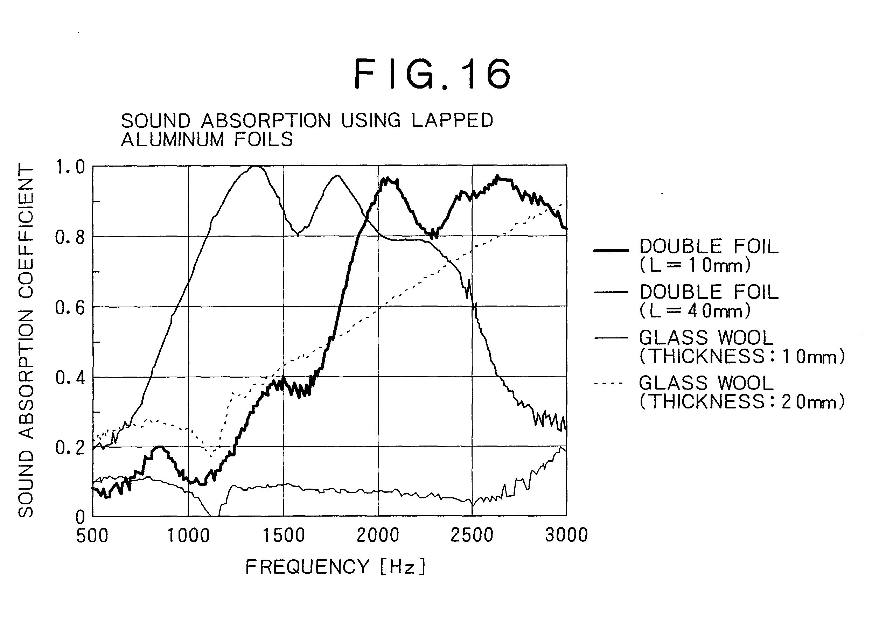

Fig. 16 shows results of an experiment which has been conducted using a perforated double aluminum foil 100 (corresponding to the fifth embodiment). More specifically, aluminum foils having a large number of holes (corresponding to the through holes (c), dia. 1 mm, the ratio of the holes: 1%) were superimposed each other while avoiding overlapping of holes and a sound absorption coefficient was measured using the experiment apparatus shown in Fig. 15.

As a comparative example, an experiment was conducted in the same manner as above with use of glass wool as a sound-absorbing material, and sound absorption coefficients obtained are also shown in Fig. 16.

As is seen from Fig. 16, in both of the case where a distance L between the double aluminum foil 100 and the rigid wall 101 is 10 mm and the case where the distance L is 40 mm, excellent sound absorption coefficients (about 0.8 or more) are obtained over wide frequency bands. A band which can exhibit an excellent sound absorption coefficient is different between L=10mm and L=40mm. This means that when only sound waves in a specific frequency band are to be effectively absorbed according to a certain purpose of use, it can also be done by such a simple method as suitably setting the distance L between the double aluminum foil 100 and the rigid wall 101.

It has been confirmed by this experiment that particularly in a low frequency range, the sound-absorbing structures according to the present invention are higher in sound absorption coefficient than glass wool having substantially the same degree of thickness.

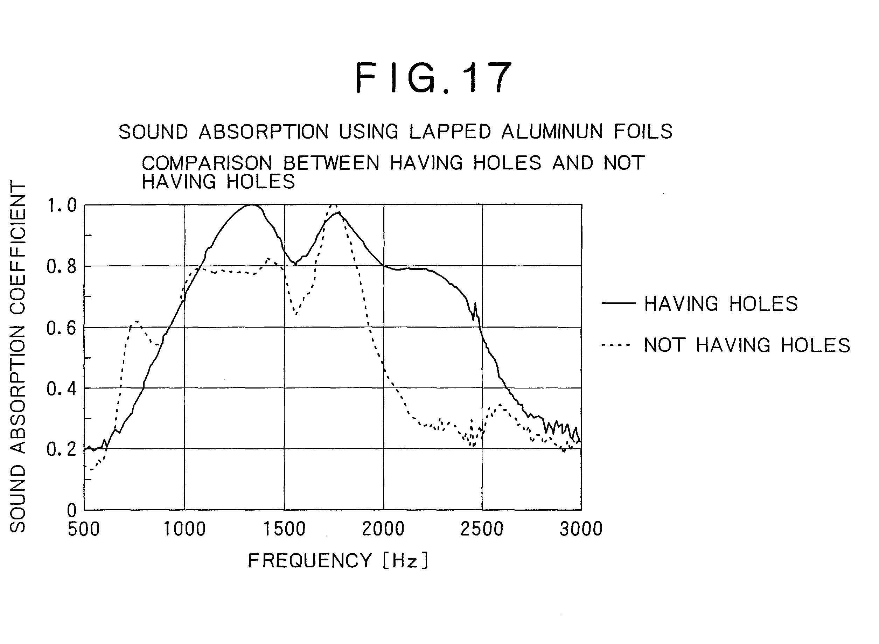

Fig. 17 shows results of an experiment conducted using a double aluminum foil 100 free of holes with results of an experiment conducted using a double aluminum foil 100 formed with holes. L was set to 10 mm.

As shown in Fig. 17, it is seen that an excellent sound absorbing effect is exhibited substantially throughout the whole frequency range of 500 to 3000 Hz in case of the double aluminum foil 100 formed with holes as compared with the same foil free of holes. This is presumed to be not only because aluminum foils are rubbed against each other to dissipate the energy of the sound wave as shown in Fig. 2 but also because (1) the energy dissipating effect during passage of the sound wave through the holes and (2) the viscous damping effect during passage of the sound wave through the holes and further through a THE gap between layered aluminum foils are added, as shown in Fig. 5, thus affording the above excellent results.

The present invention is described in the above preferred embodiments, but is not limited thereto. It will be understood that various other embodiments not departing from the spirit and scope of the present invention can be adopted.

## Claims

1. A sound-absorbing structure including at least a first thin film and a second thin film, said first thin film and said second thin film being layered over each other, and one or both of said first thin film and said second thin film having at least either ridges or grooves.

2. The sound-absorbing structure according to claim 1, wherein through holes are formed in one or both of said first thin film and said second thin film.

3. The sound-absorbing structure according to claim 2, wherein said through holes are formed in both of said first thin film and said second thin film, the through holes formed in said first thin film being formed in positions not overlapping the through holes formed in said second thin film.

4. The sound-absorbing structure according to claim 2, wherein said through holes are fine holes and formed in a large number in said thin films.

5. The sound-absorbing structure according to claim 1, wherein a rear member is installed at a position opposite to a sound wave incidence side with respect to said thin films.

6. The sound-absorbing structure according to claim 5, wherein an air layer is formed between said thin films and said rear member.

7. The sound-absorbing structure according to claim 5, wherein a distance between said rear member and said thin films is adjustable.

8. The sound-absorbing structure according to claim 1, wherein a front member having air permeability is installed at a position on a sound wave incidence side with respect to said thin films.

9. The sound-absorbing structure according to claim 8, wherein said front member is formed with a large number of fine holes.

10. The sound-absorbing structure according to claim 1, wherein a front member having air permeability is installed at a position on a sound wave incidence side with respect to said thin films, a rear member is installed at a position opposite to said front member with respect to said thin films, and a space between said front member and said rear member is divided into plural portions in the surface direction of said thin films.

11. A sound-absorbing structure including at least a first thin film and a second thin film, said first thin film and said second thin film being layered over each other, and one or both of said first thin film and said second thin film being folded so as to have mutually contacting and overlapping portions.

12. The sound-absorbing structure according to claim 11, wherein through holes are formed in one or both of said first thin film and said second thin film.

13. The sound-absorbing structure according to claim 12, wherein said through holes are formed in both of said first thin film and said second thin film, the through holes formed in said first thin film being formed in positions not overlapping the through holes formed in said second thin film.

14. The sound-absorbing structure according to claim 12, wherein said through holes are fine holes and formed in a large number in said thin films.

15. The sound-absorbing structure according to claim 11, wherein a rear member is installed at a position opposite to a sound wave incidence side with respect to said thin films.

16. The sound-absorbing structure according to claim 15, wherein an air layer is formed between said thin films and said rear member.

17. A sound-absorbing structure according to claim 15, wherein a distance between said rear member and said thin films is adjustable.

18. The sound-absorbing structure according to claim 11, wherein a front member having air permeability is installed at a position on a sound wave incidence side with respect to said thin films.

19. The sound-absorbing structure according to claim 18, wherein said front member is formed with a large number of fine holes.

20. The sound-absorbing structure according to claim 11, wherein a front member having air permeability is installed at a position on a sound wave incidence side with respect to said thin films, a rear member is installed at a position opposite to said front member with respect to said thin films, and a space between said front member and said rear member is divided into plural portions in the surface direction of said thin films.

21. A sound-absorbing structure including at least a first thin film and a second thin film, said first thin film and said second thin film being layered over each other, and through holes being formed in one or both of said first thin film and said second thin film.

22. The sound-absorbing structure according to claim 21, wherein said through holes are formed in both of said first thin film and said second thin film, the through holes formed in said first thin film being formed in positions not overlapping the through holes formed in said second thin film.

23. The sound-absorbing structure according to claim 21, wherein said through holes are fine through holes and are formed in a large number in said thin films.

24. The sound-absorbing structure according to claim 21, wherein a rear member is installed at a position opposite to a sound wave incidence side with respect to said thin films.

25. The sound-absorbing structure according to claim 24, wherein an air layer is formed between said thin films and said rear member.

26. The sound-absorbing structure according to claim 24, wherein a distance between said rear member and said thin films is adjustable.

27. The sound-absorbing structure according to claim 21, wherein a front member having air permeability is installed at a position on a sound wave incidence side with respect to said thin films.

28. The sound-absorbing structure according to claim 27, wherein said front member is formed with a large number of fine holes.

29. The sound-absorbing structure according to claim 21, wherein a front member having air permeability is installed at a position on a sound wave incidence side with respect to said thin films, a rear member is installed at a position opposite to said front member with respect to said thin films, and a space between said front member and said rear member is divided into plural portions in the surface direction of said thin films.

30. A sound-absorbing structure including at least one thin film folded so as to have mutually contacting and overlapping portions.

31. The sound-absorbing structure according to claim 30, wherein through holes are formed in said thin film.

32. The sound-absorbing structure according to claim 30, wherein a rear member is installed at a position opposite to a sound wave incidence side with respect to said thin film.

33. A sound-absorbing structure according to claim 32, wherein an air layer is formed between said thin film and said rear member.

34. The sound-absorbing structure according to claim 32, wherein a distance between said rear member and said thin film is adjustable.

35. The sound-absorbing structure according to claim 30, wherein a front member having air permeability is installed at a position on a sound wave incidence side with respect to said thin film.

36. The sound-absorbing structure according to claim 35, wherein said front member is formed with a large number of fine holes.

37. The sound-absorbing structure according to claim 30, wherein a front member having air permeability is installed at a position on a sound wave incidence side with respect to said thin film, a rear member is installed at a position opposite to said front member with respect to said thin film, and a space between said front member and said rear member is divided into plural portions in the surface direction of said thin film.

38. A sound-absorbing structure including at least a first thin film and a second thin film, said first thin film and said second thin film being layered over each other, and an air-permeable front member being installed at a position on a sound wave incidence side with respect to said thin films.

39. The sound-absorbing structure according to claim 38, wherein said front member is formed with a large number of fine holes.

40. The sound-absorbing structure according to claim 38, wherein a rear member is installed at a position opposite to a sound wave incidence side with respect to said thin films.

41. The sound-absorbing structure according to claim 38, wherein a front member having air permeability is installed at a position on a sound wave incidence side with respect to said thin films, a rear member is installed at a position opposite to said front member with respect to said thin films, and a space between said front member and said rear member is divided into plural portions in the surface direction of said thin films.
